# EUROPÄISCHE PATENTSCHRIFT

(11) **EP 1 226 757 B1**
(45) Veröffentlichungstag und Bekanntmachung des Hinweises auf die Patenterteilung: **14.04.2004**
(21) Anmeldenummer: 01101817.3
(22) Anmeldetag: 26.01.2001
(51) Int. Cl.: A22C 11/00

(54) **Vorrichtung und Verfahren zum Herstellen und Abfüllen von Wurstbrät**
Device and method for producing and stuffing sausage meat
Dispositif et procédé de production et remplissage de chair à saucisse

(43) Veröffentlichungstag der Anmeldung: 31.07.2002
(73) Patentinhaber: Albert Handtmann Maschinenfabrik GmbH & Co. KG, 88400 Biberach (DE)
(72) Erfinder: Staudenrausch, Georg, 88400 Biberach (DE)
(74) Vertreter: Grünecker, Kinkeldey, Stockmair & Schwanhäusser Anwaltssozietät

(56) Entgegenhaltungen:
- EP-A- 0 094 877
- EP-A- 0 218 790
- EP-A- 0 746 984
- US-A- 3 692 539
- US-A- 4 747 342

## Beschreibung

Die Erfindung betrifft eine Vorrichtung zum Herstellen und Abfüllen von Wurstbrät, die eine Herstellstation zum Herstellen von Wurstbrät und eine Abfüllstation zum Abfüllen des hergestellten Wurstbräts umfasst. Sie betrifft des weiteren auch ein Verfahren zur Herstellung von Wurstbrät.

Aus der US 4,747,342 ist ein Fleischemulsifierapparat bekannt, bei dem zwischen dem Emulsifierer und der Verpackungsvorrichtung ein Luftkontakt des Fleischmaterials vermieden wird. Weiterhin wird ein Speicher offenbart, der operativ mit dem Emulsifierer und der Verpackungsvorrichtung gekoppelt ist und ausgestoßene Emulsionen speichert. Wird mehr Fleischemulsion hergestellt als verpackt, füllt sich der Speicher, bis dieser einen Voll- oder oberen Anschlag erreicht, wodurch eine Wasserzufuhr, ein Wolf und ein Emulsifierer ausgeschaltet werden. Bei Entleeren des Speichers wird bei Erreichen eines Leer- oder Niedrigpunktes die Pumpe, die Wasserpumpe, der Wolf und der Emulsifierer wieder in Betrieb genommen.

Ein Nachteil dieser Vorrichtung liegt darin, dass zu den Zeiten, bei denen die Herstellung der Emulsion gestoppt ist, das halbfertige Produkt in der Herstellmaschine verweilt. Die durch das Abschalten gealterte Emulsion wird jedoch zwangsläufig in dem Produktionsprozess weiterhin zugeführt und entsprechend verpackt.

Bekannt sind auch Vorrichtungen, die einen großen Zwischenspeicher (Volumen einige hundert Liter) zwischen der Brätherstelleinrichtung und der Abfülleinrichtung versehen. Derartige Zwischenspeicher führen zu großen Verweilzeiten des Bräts im Speicher und vermindern die Brätqualität durch z.B. Oxidation.

Aufgabe der vorliegenden Erfindung ist es daher, eine Vorrichtung und ein Verfahren zu schaffen, bei dem eine weitere Verarbeitung von gealtertem Brät vermieden wird.

Diese Aufgabe wird durch eine Vorrichtung mit den Merkmalen des Anspruchs 1 und ein Verfahren mit den Merkmalen des Anspruchs 16 gelöst.

Bei der erfindungsgemäßen Vorrichtung ist eine Einrichtung zur Ermittlung des Brätmengenbedarfs der Abfüllstation vorgesehen und weiterhin eine Regeleinrichtung, die auf Grundlage des ermittelten Brätmengenbedarfs den Brätmengenausstoss der Brätherstellstation regelt. Hierbei kann die Brätherstellstation Brät mit mindestens einer Rate (Brätmenge/Zeiteinheit) ausstoßen, die zwischen den Raten liegt, bei denen die Brätherstellstation abgeschaltet ist, bzw. bei der sie unter Volllast fährt.

Durch die Möglichkeit, Brät mit mindestens einer Zwischenrate herzustellen ist es möglich, die Brätherstellstation kontinuierlich zu betreiben, auch wenn der Brätdurchsatz in der Brätabfüllstation zeitlich variabel ist. Damit lässt sich dann die Entstehung von gealtertem Brät verhindern.

Ist der Brätmengenbedarf der Abfüllstation niedrig, so kann die Produktion des Bräts verlangsamt werden, ohne dass sich eine Beeinträchtigung der Qualität des Wurstbräts ergibt. Ist der Brätmengenbedarf der Abfüllstation jedoch hoch, so kann die Brätherstellung mit maximaler Rate und damit auch maximaler Kosteneffizienz Brät ausstoßen.

Die Verwendung von großvolumigen Brätspeichem vor der Brätabfüllung kann so vermieden werden.

Eine vorteilhafte Ausführung der erfindungsgemäßen Vorrichtung besteht darin, die Regeleinrichtung so vorzusehen, dass der Brätmengenausstoß der Brätherstellstation im wesentlichen stufenlos geregelt wird. Der Begriff "im Wesentlichen stufenlos" bezieht sich auf die Möglichkeiten mittels eines digitalen Ausgabesignals der Regeleinrichtung die Brätherstellstation Brät mit z.B. mehreren Tausend verschiedenen Raten, oder aber auch mittels eines analogen Regelsignals Brät stufenlos ausstoßen zu lassen. Auf diese Weise ist es möglich, die Brätherstellstation über einen möglichst langen Zeitraum mit einer konstanten Rate zu betreiben, und so eine maximal homogene Produktqualität des hergestellten Wurstbräts zu erreichen. Durch die im Wesentlichen stufenlose Einstellbarkeit der Ausstoßrate des Wurstbräts kann diese Rate dem langfristigen Mittel des Brätdurchsatzes der Abfüllstation angepasst werden.

Eine weitere vorteilhafte Ausführung der erfindungsgemäßen Vorrichtung besteht darin, nach der Brätherstellstation, in der Abfüllstation mindestens einen Speicher für Wurstbrät vorzusehen. Durch einen solchen Speicher ist es möglich, kurzfristige Änderungen des Durchsatzes von Wurstbrät in der Abfüllstation aufzufangen, ohne dass sich eine Änderung der Ausstoßrate von Wurstbrät aus der Herstellstation ergibt. Der Speicherinhalt kann vorzugsweise 50 bis 100 Liter betragen, aber auch darüber oder darunter liegen. Ist der momentane Brätdurchsatz der Abfüllstation Null oder sehr niedrig, so kann das von der Herstellstation ausgestoßene Brät in dem Speicher zwischengespeichert werden, ohne dass sich eine Reduktion des Brätausstoßes der Brätherstellstation ergibt. Ist der Durchsatz von Brät in der Abfüllstation jedoch sehr groß im Vergleich zu dem Ausstoß der Herstellstation, so wird sich die Brätmenge in dem Speicher reduzieren.

Eine weitere vorteilhafte Ausführung der Erfindung besteht darin, dass zur Ermittlung des Brätmengenbedarfs der Brätmengendurchsatz der Brätabfüllstation erfasst wird. Durch eine extrem hohe Portioniergenauigkeit ist es möglich, den Brätmengendurchsatz einer Abfüllstation mit der entsprechenden Präzision zu erfassen. Dadurch kann die aus dem Speicher entnommene Brätmenge bestimmt und auf Grundlage dessen, der Brätmengenbedarf der Abfüllstation festgestellt werden.

Eine weitere vorteilhafte Ausführung der Erfindung besteht darin, zwischen der Brätherstellstation und der Abfüllstation mindestens ein Rohr für Brättransport vorzusehen. Durch ein solches Rohr ist es möglich, das Brät hygienisch und unter Abschluss von Luft aus der Brätherstellstation wegzuführen und zu der Brätabfüllstation hinzuführen.

Eine weitere vorteilhafte Ausführung der erfindungsgemäßen Vorrichtung besteht darin, dass die Brätherstellstation einen Wolf und/oder einen Mischer und/oder einen Evakuierer und/oder eine Pumpe und/oder einen Emulsifierer umfasst, dessen Brätdurchsatz von der Regeleinrichtung geregelt wird. Durch die Möglichkeit den Durchsatz der verschiedenen Einrichtungen der Brätherstellstation zu regeln ist es möglich entsprechend dem benötigten Brätausstoß der Brätherstellstation eine optimale Produktqualität zu gewährleisten. Durch die Möglichkeit die verschiedenen Einrichtungen in der Brätherstellstation aufeinander abzustimmen, kann für verschiedene Ausstoßraten der Brätherstellstation der Durchsatz der entsprechenden Einrichtung so geregelt werden, dass sich für jede Ausstoßrate eine gleichbleibende Produktqualität ergibt.

Eine vorteilhafte Ausführungsform der Erfindung besteht darin, dass mehrere Abfüllstationen vorgesehen sind. Die Kapazität einer Brätherstellstation übertrifft in der Regel deutlich die Kapazität einer Brätabfüllstation. Daher ist es vorteilhaft, die Brätherstellstation mit möglichst maximaler Kapazität zu fahren und eine entsprechende Anzahl von Brätabfüllstationen bereitzustellen.

Vorteilhafterweise wird hierbei für jede Abfüllstation mindestens ein Speicher vorgesehen. Dadurch ist es möglich, jede einzelne Abfüllstation unabhängig von den anderen Abfüllstationen zu betreiben, und störende Interferenzen zwischen den verschiedenen Abfüllstationen durch beispielsweise sich zeitlich ändernde Drücke in den Zuleitungen zu den einzelnen Auffüllstationen hin, zu vermeiden. Weiterhin ist es durch die Bereitstellung eines Speichers für jede Abfüllstation möglich, am Eingang einer jeden Abfüllstation einen konstanten Druck des Bräts zu gewährleisten. Dies ist insbesondere im Hinblick auf eine hohe Portioniergenauigkeit von Vorteil. Eine vorteilhafte Ausführungsform der Erfindung besteht weiterhin darin, für jede Abfüllstation mindestens eine Einrichtung zur Ermittlung des Brätmengenbedarfs der jeweiligen Abfüllstation vorzusehen. Durch die Ermittlung des Brätmengenbedarfs der einzelnen Abfüllstationen kann der Brätmengenbedarf des gesamten Abfüllprozesses ermittelt werden und der Herstellprozess entsprechend angepasst werden.

Eine besonders vorteilhafte Ausführungsform der Erfindung besteht darin, dass Brät, welches von der Brätherstellstation hergestellt wird, unter Luftabschluss und unter Druck zumindest teilweise von der Brätherstellstation bis in die Abfüllstationen zu transportieren. Durch Kontakt von Brät mit Luft kann es zu Hygieneproblemen kommen und oftmals ergibt sich weiterhin eine Verfärbung des Bräts. Diese Reduktion der Produktqualität des Bräts kann dadurch vermieden werden, dass ein direkter Kontakt des Bräts mit Luft von vornherein vermieden wird. Durch Transportieren des Bräts unter Druck von der Brätherstellstation bis in die Abfüllstation kann ein gleichbleibender Brätdruck am Eingang der Brätabfüllstation gewährleistet werden. In Bezug auf die Portioniergenauigkeit der Abfüllstation ist dies besonders vorteilhaft.

Das erfindungsgemäße Verfahren zum Herstellen und Abfüllen des hergestellten Wurstbräts besteht darin, dass auf Grundlage des Brätmengenbedarfs des Abfüllprozesses Wurstbrät von dem Herstellungsprozess mit mindestens einer Rate ausgestoßen wird, die zwischen der Rate eines abgeschalteten und eines unter Volllast fahrenden Herstellprozesses liegt. Durch Variation der Rate mit welcher Brät von dem Herstellprozess ausgestoßen wird, ist es möglich, einen kontinuierlichen Betrieb des Herstellprozesses zu gewährleisten. Durch das kontinuierliche Herstellen von Brät wird eine Oxidation des Bräts oder der Brätemulsion, welche sich bei einem längeren Stehen lassen des Bräts ergibt, weitgehend vermieden.

Besonders vorteilhaft ist hierbei ein Verfahren bei dem je nach Brätmengenbedarf des Abfüllprozesses der Brätherstellprozess Wurstbrät mit einer im Wesentlichen stufenlosen einstellbaren Rate ausstößt. Dadurch, dass es möglich ist, die Rate mit der der Herstellprozess Brät ausstößt im Wesentlichen stufenlos einzustellen, kann eine Feinabstimmung zwischen dem langfristigen Durchsatz der Brätabfüllstation sowie der Funktionsrate des Herstellprozesses erreicht werden. Ein kontinuierlicher Betrieb des Herstellprozesses mit einer konstanten Produktionsrate gewährleistet eine hohe Produktqualität bei gleichzeitiger hoher Produkthomogenität.

Besonders vorteilhaft ist hierbei ein Verfahren, bei dem der Brätmengenausstoß des Herstellprozesses auf Grundlage des Brätmengenbedarfs des Abfüllprozesses geregelt wird. Eine Regelung des Brätmengenausstoßes des Herstellprozesses auf Grundlage des Brätmengenbedarfs des Abfüllprozesses erlaubt eine weitgehende Automatisierung und Synchronisierung des Brätherstellprozesses mit dem Brätabfüllprozess.

Eine weitere vorteilhafte Ausführung des erfindungsgemäßen Verfahrens besteht darin, das Wurstbrät nach dem Herstellen und vor dem Abfüllen zwischenzuspeichem. Durch die Zwischenspeicherung wird der Brätherstellprozess und der Brätabfüllprozess zumindest teilweise voneinander entkoppelt, so dass sich kurzfristig verschiedene Brätdurchsatzraten mittels des Speicherns ausgleichen lassen.

Eine weitere vorteilhafte Ausführungsform des erfindungsgemäßen Verfahrens besteht darin, den Brätmengenbedarf dadurch zu ermitteln, dass gemessen wird wie viel Brät gespeichert ist. Durch dieses Verfahren ist es vorteilhafterweise möglich, mit relativ einfachem Aufwand den Brätmengenbedarf einer Abfüllstation zu ermitteln und so die Ausstoßrate des Herstellprozesses entsprechend anzupassen. Eine weitere vorteilhafte Ausführung des Verfahrens besteht darin, zur Ermittlung des Brätmengenbedarfs den Brätmengendurchsatz der Brätabfüllstation zu erfassen. Dadurch, dass heutige Brätabfüllstationen mit einer sehr hohen Portioniergenauigkeit Brät abfüllen können, ist es möglich, den Brätmengendurchsatz und somit die Brätmenge die pro Zeiteinheit zum Beispiel einem Speicher entnommen wird zu bestimmen. Daraus lässt sich der Brätmengenbedarf einer Brätabfüllstation ermitteln.

Eine besonders vorteilhafte Ausführungsform des erfindungsgemäßen Verfahrens besteht darin, den Herstellprozess und den Abfüllprozess so zu betreiben, dass nur eine minimal nötige Menge von Brät gespeichert wird. Der Ausdruck "minimal nötige Menge" bezieht sich auf eine solche Menge bei der ein kontinuierlicher Betrieb des Brätherstellprozesses möglich ist und in dem Speicher, welcher das Brät speichert, immer eine solche Menge vorhanden ist, die eine fehlerfreie Funktion des Brätabfüllprozesses gewährleistet. Steht beispielsweise bei dem Brätabfüllprozess nicht genügend Brät zur Verfügung, so muss der Brätabfüllprozess unterbrochen werden, welcher sich auf die Portioniergenauigkeit negativ auswirkt. Durch die Speicherung einer minimal nötigen Menge verringern sich die Verweilzeiten des Bräts in dem Speicher und dementsprechend die gesamte Verarbeitungszeit des Bräts von seiner Herstellung bis zur Abfüllung. Wie bereits oben erwähnt, wirkt sich eine längere Stehzeit des Bräts negativ auf die Produktqualität aus.

Im Folgenden wird eine Ausgestaltung des erfinderischen Verfahrens anhand der Ausführungsform der erfindungsgemäßen Vorrichtung mit Hilfe der anliegenden Figuren erläutert. Dabei zeigt:
Fig. 1 einen Vorschaltplan einer Wurstbrätherstell- und Abfüllvorrichtung nach einer ersten Ausführungsform, die insbesondere für Rohbrätwurst verwendet wird; und
Fig. 2 einen Vorschaltplan für eine Vorrichtung zum Herstellen und Abfüllen von Wurstbrät nach einer zweiten Ausführungsform, die insbesondere für Brühwurst verwendet werden kann.

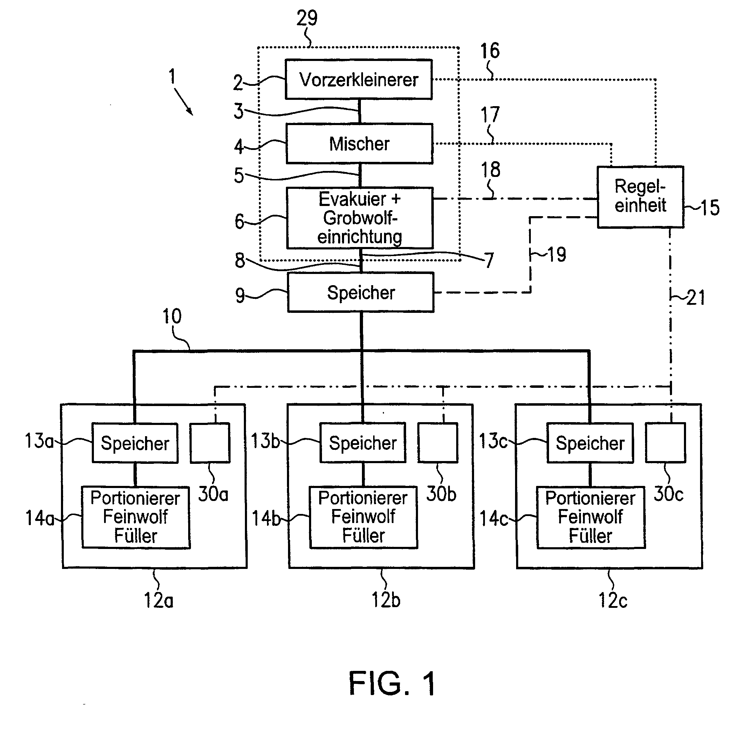

Wie in Fig. 1 gezeigt, umfasst die Vorrichtung 1 einen Vorzerkleinerer 2, der über eine Einrichtung 3 vorzerkleinertes Material einem Mischer 4 zuführt, der das gemischte Material über eine Einrichtung 5 einer Evakuier-Pump- und Grobwolfeinrichtung 6 zuführt. Die Bezugsziffer 29 bezeichnet die Brätherstellstation. Das so hergestellte Brät wird über eine Austrittsöffnung 7 durch ein Rohr 8 in einen optionalen Speicher 9 überführt. Wird der Speicher 9 weggelassen, so wird die Stehzeit des Bräts vor dem Abfüllen weiter reduziert, was sich positiv auf die Brätqualität auswirkt. Aus dem Speicher 9 wird das Brät weiterhin unter Luftabschluss durch die Rohre 10 den Portionierabfülleinheiten 12a, 12b, 12c zugeführt. Jede Portionier- und Abfülleinheit 12a, 12b, 12c umfasst einen Speicher 13a, 13b und 13c. Weiterhin umfassen die Abfülleinheiten einen Portionierer, einen Feinwolf, der das Brät auf die Endkömung wolft, sowie einen Füller, welche unter der Bezugsziffer 14a, 14b und 14c zusammengefasst sind. Die Einrichtungen 30 bestimmen den Brätmengenbedarf der Abfüllstation beispielsweise durch Messen des Inhalts der Speicher 13. Alternativ kann der Brätmengenbedarf auch aus dem Brätmengendurchsatz der Abfüllstation bestimmt werden. Der ermittelte Brätmengenbedarf wird über die Signalleitungen 21 an die Regeleinheit 15 übermittelt. Weiterhin wird über die Signalleitung 19 der Regeleinheit 15 der Füllstand des Speichers 9 übermittelt. Entsprechend dem Brätmengenbedarf, der sich hier beispielweise aus dem Inhalt des Speichers 9 sowie der Speicher 13a, 13b und 13c ergibt, wird über die Signalleitung 16, 17 und 18 der Vorzerkleinerer 2 der Mischer 4 sowie der Evakuierer die Pumpe und der Grobwolf 6 geregelt. Falls kein Speicher 9 vorgesehen ist, ergibt sich der Brätmengenbedarf nur aus dem Speicherinhalt der jeweiligen Abfüllstationen bzw. deren Brätmengendurchsatz.

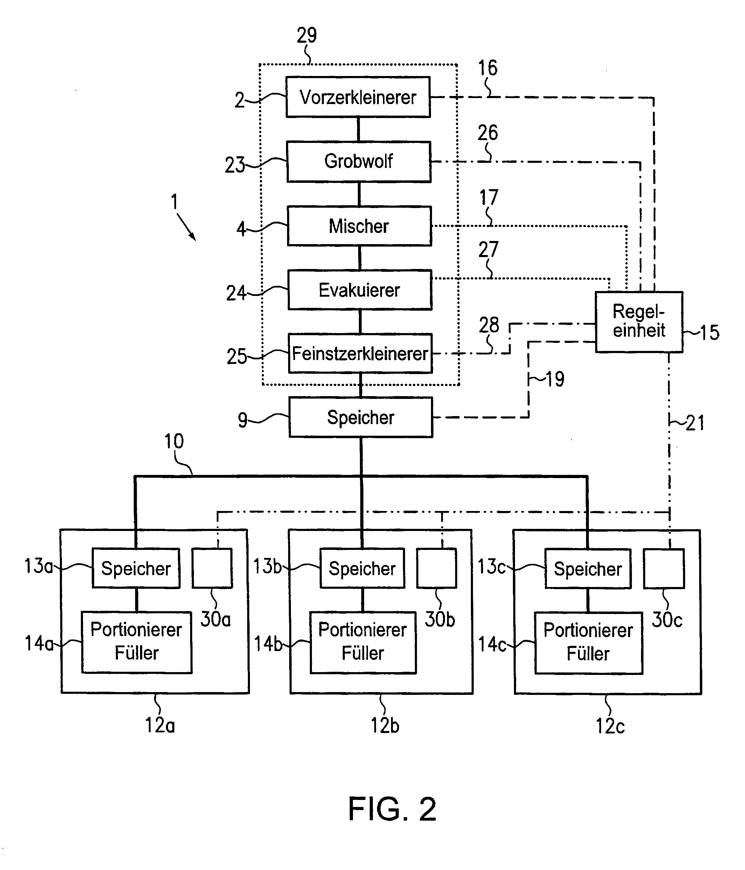

In Fig. 2 wird eine Vorrichtung gezeigt, die sich insbesondere dazu eignet, Brühwurstbrät herzustellen und abzufüllen. Im Vorzerkleinerer 2 wird Material vorzerkleinert, das anschließend in dem Grobwolf 23 grob gewolft wird. Ein Mischer 4, der beispielsweise auch eine Pumpe enthält führt das gemischte Material dem Evakuierer 24 zu, der es mittels einer Pumpe dem Emulsifierer 25, auch Feinstzerkleinerer genannt, zuführt. Das am Emulsifierer austretende Brät wird zunächst in einem optionalen Speicher 9 gespeichert. Durch das Rohrleitungssystem 10 wird das Brät in die Abfüllstationen 12a, 12b und 12c eingeführt und dort in einem Speicher 13a, 13b oder 13c gespeichert. Unter der Bezugsziffer 14 ist der anschließende Portionierer und Füller zusammengefasst. Die Abfülleinheiten 12a, 12b und 12c umfassen eine Einrichtung 30, welche z.B. durch Messen des Inhalts des Speichers 13 den Brätmengenbedarf ermitteln und diesen über die Leitung 21 der Regeleinheit 15 übermitteln. Der Brätmengenbedarf kann auch durch den Brätmengendurchsatz der Abfülleinheit bestimmt werden. Weiterhin übermittelt der Speicher 9 über die Signalleitung 19 der Regeleinheit 15 den aktuellen Füllstand. Die Regeleinheit 15 regelt entsprechend dem Brätmengenbedarf über die Signalleitungen 16, 26, 17, 27 und 28 den Vorzerkleinerer 2, Grobwolf 23, Mischer 4 mit Pumpe, Evakuierer 24 mit Pumpe und Emulsifierer 25. Mit der Bezugsziffer 29 wird die Brätherstellstation bezeichnet.

Das erfindungsgemäße Verfahren wird mit der Ausführungsform der erfindungsgemäßen Vorrichtung der Figur 1 und 2 wie folgt durchgeführt:

In der Brätherstellstation 29 wird, jenachdem ob es sich um eine Brühwürstbrät- oder Rohwurstbrätherstellstation handelt, Wurstbrät mit den entsprechenden Schritten hergestellt. Das so hergestellte Wurstbrät kann zunächst in einem optionalen Speicher 9 zwischengespeichert werden. Anschließend wird das Wurstbrät über die Rohrleitungen 10 zu den einzelnen Abfüllstationen 12a bis 12c weitergeleitet und verteilt. Die Abfüllstationen 12a, 12b und 12c speichern das hergestellte Brät, portionieren es und füllen es anschließend ab. Wenn beispielsweise der Speicher 13c sehr voll wird, so wird dies der Regeleinheit 15 über die Signalleitung 21 übermittelt. Sollten zu einem bestimmten Zeitpunkt die Speicher 13a, 13b und 13c bereits alle sehr voll sein, so ist es möglich, ohne den Herstellprozess zu unterbrechen den Speicher 9 zu füllen. Dieser optionale Speicher 9 kann hierbei das gesamte oder einen Teil des hergestellten Wurstbräts zumindest zeitweise aufnehmen. Sollte auch der Speicher 9 neben den Speichern 13 vollaufen, so wird die Regeleinheit 15 die entsprechenden Komponenten der jeweiligen Brätherstellstation 29 veranlassen, einen geringeren von Null verschiedenen Brätdurchsatz zu erzielen. Daraufhin sollte der Speicher 9 bzw. die Speicher 13 der Abfüllstation 12 ihren Brätmengeninhalt nach und nach verkleinern. Die Regeleinheit 15 kann den Brätmengenausstoß der Brätmengenherstellstation auf ein langfristiges Mittel des Brätmengenbedarfs der Auffüllstationen einzustellen. Kurzfristige Über- oder Unterkapazitäten der Auffüllstationen können mittels der Speicher 9 und 13 ausgeglichen werden.

Die Speicher (9,13) können als Druckkolbenspeicher oder als trichterförmige Gefäße ausgebildet sein. Die einzelnen Abfüllstationen können für z.B. Reinigungszwecke von der gesamten Anlage abgetrennt werden.

## Patentansprüche

1. Vorrichtung zum Herstellen und Abfüllen von Wurstbrät umfassend:
- eine Herstellstation (29) zum Herstellen von Wurstbrät
- eine Abfüllstation (12a, 12b, 12c) zum Abfüllen des von der Herstellstation hergegestell tem Wurstbrät
**gekennzeichnet durch**
- eine Einrichtung (30a, 30b, 30c) zur Ermittlung des Brätmengenbedarfs der Abfüllstation (12a, 12b, 12c) und
- eine Regeleinrichtung (15), die den Brätmengenausstoß der Brätherstellstation (29) auf Grundlage des ermittelten Brätmengenbedarfs zwischen den Stufen des Abschaltens und des Volllastfahrens auf mindestens einer weiteren Zwischenstufe, bei der die Brätmengenausstoßrate der Herstellstation (29) zwischen der einer abgeschalteten und einer unter Volllast gefahrenen Herstellstation liegt, regelt.

2. Vorrichtung nach Anspruch 1, wobei die Regeleinrichtung (15) so vorgesehen ist, dass der Brätmengenausstoß der Brätherstellstation (29) im Wesentlichen stufenlos auf Grundlage des Brätmengenbedarfs der Abfüllstation (12a, 12b, 12c) geregelt wird.

3. Vorrichtung nach Anspruch 1 oder 2, wobei zwischen der Brätherstellstation (29) und der Abfüllstation (12a, 12b, 12c) mindestens ein Speicher 9 für Brät vorgesehen ist.

4. Vorrichtung nach einem der Ansprüche 1 bis 3, wobei eine Einrichtung (30a, 30b, 30c) zur Ermittlung des Brätmengenbedarfs so vorgesehen ist, dass zur Ermittlung des Brätmengenbedarfs der Brätmengendurchsatz der Brätabfüllstation (12a, 12b, 12c) erfasst wird.

5. Vorrichtung nach einem der Ansprüche 1 bis 4, wobei zwischen der Brätherstellstation (29) und der Abfüllstation (12a, 12b, 12c) mindestens ein Rohr (10) für Brättransport vorgesehen ist.

6. Vorrichtung nach einem der Ansprüche 1 bis 5, wobei die Brätherstellstation (29) einen Wolf (23) umfasst, dessen Durchsatz von der Regeleinrichtung (15) geregelt wird.

7. Vorrichtung nach einem der Ansprüche 1 bis 6, wobei die Brätherstellstation mindestens einen Mischer (4) umfasst, dessen Brätdurchsatz von der Regeleinrichtung (15) geregelt wird.

8. Vorrichtung nach einem der Ansprüche 1 bis 7, wobei die Brätherstellstation (29) mindestens einen Evakuierer (6, 24) umfasst, dessen Brätdurchsatz von der Regeleinrichtung (15) geregelt wird.

9. Vorrichtung nach einem der Ansprüche 1 bis 8, wobei die Brätherstellstation (29) mindestens eine Pumpe (4, 6, 24) umfasst, dessen Brätdurchsatz von der Regeleinrichtung (15) geregelt wird.

10. Vorrichtung nach einem der Ansprüche 1 bis 9, wobei die Brätherstellstation (29) einen Emulsifierer (25) umfasst, dessen Brätdurchsatz von der Regeleinrichtung (15) geregelt wird.

11. Vorrichtung nach einem der Ansprüche 1 bis 10, wobei die Brätherstellstation (29) einen Vorzerkleinerer (2) umfasst, dessen Durchsatz von der Regeleinrichtung (15) geregelt wird.

12. Vorrichtung nach einem der Ansprüche 1 bis 11, wobei mehrere Abfüllstationen (12a, 12b, 12c) vorgesehen sind.

13. Vorrichtung nach Anspruch 12, wobei für jede Abfüllstation (12a, 12b, 12c) mindestens ein Speicher (13a, 13b, 13c) vorgesehen ist.

14. Vorrichtung nach einem der Ansprüche 12 oder 13, wobei für jede Abfüllstation (12a, 12b, 12c) mindestens eine Einrichtung (30a, 30b, 30c) zur Ermittlung des Brätmengenbedarfs der jeweiligen Abfüllstation (12a, 12b, 12c) vorgesehen ist.

15. Vorrichtung nach einem der Ansprüche 1 bis 14, wobei das hergestellte Brät unter Luftabschluss und unter Druck zumindest teilweise von der Brätherstellstation (29) bis in die Abfüllstation (12a, 12b, 12c) transportiert wird.

16. Verfahren zum Herstellen und Abfüllen des hergestellten Wurstbrät,
**dadurch gekennzeichnet, dass**
auf Grundlage des Brätmengenbedarfs des Abfüllprozesses mittels einer Regeleinrichtung Wurstbrät von dem Herstellprozess mit mindestens einer Rate ausgestoßen wird, die zwischen der Rate eines abgeschalteten und eines unter Volllast fahrenden Herstellprozesses liegt.

17. Verfahren nach Anspruch 16, wobei je nach Brätmengenbedarf des Abfüllprozesses der Brätherstellprozess Wurstbrät mit einer im Wesentlichen stufenlos einstellbaren Rate ausstößt.

18. Verfahren nach einem der Ansprüche 16 oder 17, wobei der Brätmengenausstoß des Herstellprozesses auf Grundlage des Brätmengenbedarfs des Abfüllprozesses geregelt wird.

19. Verfahren nach einem der Ansprüche 16 bis 18, wobei das Wurstbrät nach dem Herstellen und vor dem Abfüllen gespeichert wird.

20. Verfahren nach Anspruch 19, wobei zur Ermittlung des Brätmengenbedarfs gemessen wird, wie viel Brät gespeichert wird.

21. Verfahren nach einem der Ansprüche 16 bis 20, wobei zur Ermittlung des Brätmengenbedarfs der Brätmengendurchsatz der Brätabfüllsation erfasst wird.

22. Verfahren nach einem der Ansprüche 16 bis 21, wobei der Brätherstellprozess so betrieben wird, dass eine minimal nötige Menge von Brät gespeichert wird.

## Claims

1. An apparatus for producing and filling sausage meat, comprising:
- a producing station (29) for producing sausage meat,
- a filling station (12a, 12b, 12c) for filling the sausage meat produced by said producing station,
**characterized by**
- a means (30a, 30b, 30c) for determining the amount of sausage meat needed by said filling station (12a, 12b, 12c), and
- a control means (15) which controls the sausage meat output of said sausage-meat producing station (29) on the basis of the determined amount of needed sausage meat between the deactivation stage and the full load stage in at least one further intermediate stage in which the sausage meat output rate of said producing station (29) lies between the rates of a deactivated producing station and a full-load driven producing station.

2. The apparatus according to claim 1, wherein said control means (15) is designed such that the sausage meat output of said sausage-meat producing station (29) is controlled substantially continuously on the basis of the amount of sausage meat needed by said filling station (12a, 12b, 12c).

3. The apparatus according to claim 1 or 2, wherein at least one reservoir (9) for storing sausage meat is provided between said sausage-meat producing station (29) and said filling station (12a, 12b, 12c).

4. The apparatus according to any one of claims 1 to 3, wherein a means (30a, 30b, 30c) for determining the amount of sausage meat needed is provided such that the sausage meat throughput of said sausage-meat filling station (12a, 12b, 12c) is sensed for determining the amount of sausage meat needed.

5. The apparatus according to any one of claims 1 to 4, wherein at least one pipe (10) for transporting sausage meat is provided between said sausage-meat producing station (29) and said filling station (12a, 12b, 12c).

6. The apparatus according to any one of claims 1 to 5, wherein said sausage-meat producing station (29) comprises a grinder (23) whose throughput is controlled by said control means (15).

7. The apparatus according to any one of claims 1 to 6, wherein said sausage-meat producing station comprises at least one mixer (4) whose sausage meat throughput is controlled by said control means (15).

8. The apparatus according to any one of claims 1 to 7, wherein said sausage-meat producing station (29) comprises at least one evacuator (6, 24) whose sausage meat throughput is controlled by said control means (15).

9. The apparatus according to any one of claims 1 to 8, wherein said sausage-meat producing station (29) comprises at least one pump (4, 6, 24) whose sausage meat throughput is controlled by said control means (15).

10. The apparatus according to any one of claims 1 to 9, wherein said sausage-meat producing station (29) comprises an emulsifier (25) whose sausage meat throughput is controlled by said control means (15).

11. The apparatus according to any one of claims 1 to 10, wherein said sausage-meat producing station (29) comprises a pre-chopper (2) whose throughput is controlled by said control means (15).

12. The apparatus according to any one of claims 1 to 11, wherein a plurality of filling stations (12a, 12b, 12c) are provided.

13. The apparatus according to claim 12, wherein at least one reservoir (13a, 13b, 13c) is provided for each filling station (12a, 12b, 12c).

14. The apparatus according to any one of claims 12 or 13, wherein for each filling station (12a, 12b, 12c) at least one means (30a, 30b, 30c) is provided for determining the amount of sausage meat needed by the respective filling station (12a, 12b, 12c).

15. The apparatus according to any one of claims 1 to 14, wherein the sausage meat produced is transported under exclusion of air and under pressure at least in part from said sausage-meat producing station (29) into said filling station (12a, 12b, 12c).

16. A method for producing and filling the sausage meat produced,
**characterized in that**,
on the basis of the amount of sausage meat needed by the filling process, sausage meat is ejected with the help of a control means in the producing process at least at a rate which lies between the rate of a deactivated producing process and a full-load producing process.

17. The method according to claim 16, wherein, in response to the amount of sausage meat needed in the filling process of the sausage-meat producing process, sausage meat is ejected at a rate which is adjustable substantially continuously.

18. The method according to any one of claims 16 or 17, wherein the sausage meat output of the producing process is controlled on the basis of the amount of sausage meat needed in the filling process.

19. The method according to any one of claims 16 to 18, wherein the sausage meat is stored after production and prior to filling.

20. The method according to claim 19, wherein for the determination of the amount of sausage meat needed a measurement is carried out as to how much sausage meat is stored.

21. The method according to any one of claims 16 to 20, wherein for the determination of the amount of sausage meat needed; the sausage meat throughput of the sausage-meat filling station is sensed.

22. The method according to any one of claims 16 to 21, wherein the sausage-meat producing process is carried out such that a minimally necessary amount of sausage meat is stored.

## Revendications

1. Dispositif de fabrication et de conditionnement de chair à saucisse, comprenant :
- un poste de fabrication (29) pour fabriquer de la chair à saucisse
- un poste de conditionnement (12a, 12b, 12c) pour conditionner la chair à saucisse fabriquée par le poste de fabrication
**caractérisé par**
- un équipement (30a, 30b, 30c) pour déterminer les besoins quantitatifs de chair du poste de conditionnement (12a, 12b, 12c) et
- un équipement de régulation (15) qui régule l'expulsion quantitative de chair du poste de fabrication de chair (29) sur la base des besoins quantitatifs de chair déterminés, entre les niveaux de l'arrêt et du service à pleine charge, à au moins un autre niveau intermédiaire auquel le débit d'expulsion quantitative de chair du poste de fabrication (29) se situe entre celui d'un poste de fabrication arrêté et d'un poste de fabrication travaillant à pleine charge.

2. Dispositif selon la revendication 1, dans lequel l'équipement de régulation (15) est prévu de telle façon que l'expulsion quantitative de chair du poste de fabrication de chair (29) est régulée substantiellement sans paliers sur la base des besoins quantitatifs de chair du poste de conditionnement (12a, 12b, 12c).

3. Dispositif selon l'une des revendications 1 et 2, dans lequel au moins un réservoir (9) pour chair est prévu entre le poste de fabrication de chair (29) et le poste de conditionnement (12a, 12b, 12c).

4. Dispositif selon l'une des revendications 1 à 3, dans lequel un équipement (30a, 30b, 30c) pour déterminer les besoins quantitatifs de chair est prévu de telle façon que le débit quantitatif de chair du poste de conditionnement de chair (12a, 12b, 12c) est détecté pour déterminer les besoins quantitatifs de chair.

5. Dispositif selon l'une des revendications 1 à 4, dans lequel au moins un tube (10) est prévu entre le poste de fabrication de chair (29) et le poste de conditionnement (12a, 12b, 12c) pour le transport de chair.

6. Dispositif selon l'une des revendications 1 à 5, dans lequel le poste de fabrication de chair (29) comprend un hache-viande (23) dont le débit est régulé par l'équipement de régulation (15).

7. Dispositif selon l'une des revendications 1 à 6, dans lequel le poste de fabrication de chair comprend au moins un mélangeur (4) dont le débit de chair est régulé par l'équipement de régulation (15).

8. Dispositif selon l'une des revendications 1 à 7, dans lequel le poste de fabrication de chair (29) comprend au moins un appareil de mise sous vide (6, 24) dont le débit de chair est régulé par l'équipement de régulation (15).

9. Dispositif selon l'une des revendications 1 à 8, dans lequel le poste de fabrication de chair (29) comprend au moins une pompe (4, 6, 24) dont le débit de chair est régulé par l'équipement de régulation (15).

10. Dispositif selon l'une des revendications 1 à 9, dans lequel le poste de fabrication de chair (29) comprend une émulsionneuse (25) dont le débit de chair est régulé par l'équipement de régulation (15).

11. Dispositif selon l'une des revendications 1 à 10, dans lequel le poste de fabrication de chair (29) comprend un pré-hacheur (2) dont le débit est régulé par l'équipement de régulation (15).

12. Dispositif selon l'une des revendications 1 à 11, dans lequel sont prévues plusieurs postes de conditionnement (12a, 12b, 12c).

13. Dispositif selon la revendication 12, dans lequel pour chaque poste de conditionnement (12a, 12b, 12c) est prévu au moins un réservoir (13a, 13b, 13c).

14. Dispositif selon l'une des revendications 12 ou 13, dans lequel pour chaque poste de conditionnement (12a, 12b, 12c) est prévu au moins un équipement (30a, 30b, 30c) pour déterminer les besoins quantitatifs de chair du poste de conditionnement (12a, 12b, 12c) considéré.

15. Dispositif selon l'une des revendications 1 à 14, dans lequel la chair fabriquée est transportée à l'abri de l'air et sous pression au moins partiellement du poste de fabrication de chair (29) jusque dans le poste de conditionnement (12a, 12b, 12c).

16. Procédé de fabrication et de conditionnement de la chair à saucisse fabriquée
**caractérisé en ce que**
sur la base des besoins quantitatifs de chair du processus de conditionnement, au moyen d'un équipement de régulation, de la chair à saucisse est expulsée du processus de fabrication à au moins un débit qui se situe entre le débit d'un processus de fabrication arrêté et d'un processus de fabrication travaillant à pleine charge.

17. Procédé selon la revendication 16, dans lequel, selon les besoins quantitatifs de chair du processus de conditionnement, le processus de fabrication de chair expulse de la chair à saucisse à un débit réglable substantiellement sans paliers.

18. Procédé selon l'une des revendications 16 ou 17, dans lequel le débit de chair du processus de fabrication est régulé sur la base des besoins quantitatifs de chair du processus de conditionnement.

19. Procédé selon l'une des revendications 16 à 18, dans lequel la chair à saucisse est stockée après la fabrication et avant le conditionnement.

20. Procédé selon la revendication 19, dans lequel pour déterminer les besoins quantitatifs de chair on mesure combien de chair est stockée.

21. Procédé selon l'une des revendications 16 à 20, dans lequel le débit de chair du poste de conditionnement de chair est détecté pour déterminer les besoins quantitatifs de chair.

22. Procédé selon l'une des revendications 16 à 21, dans lequel le processus de fabrication de chair est conduit de telle façon qu'une quantité minimale requise de chair est stockée.
